# EUROPEAN PATENT APPLICATION

(11) **EP 4 411 903 A1**
(43) Date of publication of application: **07.08.2024**
(21) Application number: 22876581.4
(22) Date of filing: 30.09.2022
(51) Int. Cl.: H01M 8/04, H01M 8/04007, H01M 8/04014, H01M 8/04029, H01M 8/04746, H01M 8/0606, H01M 8/10, H01M 8/12, H01M 8/2475, F24H 1/00

(54) **COGENERATION SYSTEM**

(30) Priority: 30.09.2021 JP 2021162085; 18.08.2022 JP 2022130783
(71) Applicant: Kyocera Corporation, Kyoto-shi Kyoto 612-8501 (JP)
(72) Inventor: KAWAGUCHI Yutaka, Kyoto-shi, Kyoto 612-8501 (JP)
(74) Representative: TBK
(86) International application number: PCT/JP2022/036857
(87) International publication number: WO 2023/054719

(57) **Abstract**

A cogeneration system includes a fuel battery, a heat supply channel, and a first heat exchange portion. The fuel battery houses a fuel battery cell. The heat supply channel causes a medium that recovers heat generated by the fuel battery to flow therein. The first heat exchange portion that is positioned close to the outer side of the fuel battery or positioned within the fuel battery to cause the medium flowing in the heat supply channel to recover the heat generated by the fuel battery.

## Description

### TECHNICAL FIELD

The present disclosure relates to a cogeneration system.

### BACKGROUND OF INVENTION

A known household cogeneration system generates electric power by using a fuel battery, recovers heat discharged from the fuel battery, and uses the recovered heat to heat municipal water and supply the heated water (see Patent Literature 1).

### CITATION LIST

### PATENT LITERATURE

Patent Literature 1: Japanese Unexamined Patent Application Publication No. 2002-298863

### SUMMARY

### PROBLEM TO BE SOLVED

In a cogeneration system using a fuel battery, it has been difficult to provide the heat required to heat the hot water to be supplied with the recovered heat alone, so that it is necessary to install a water heater to further heat the hot water.

Therefore, in view of the problems of the conventional techniques described above, the present disclosure provides a cogeneration system that can provide more heat to the medium as required.

### SOLUTION TO PROBLEM

In one embodiment, (1) a cogeneration system includes: a fuel battery, a heat supply channel, and a first heat exchange portion. The heat supply channel causes a medium that recovers heat generated by the fuel battery to flow therein. The first heat exchange portion is positioned close to the outer side of the fuel battery or positioned within the fuel battery to cause the medium circulating in the waste heat recovery channel to recover the heat generated by the fuel battery.

(2) The cogeneration system according to above (1) further includes: a second heat exchange portion that exchanges heat between an exhaust gas of the fuel battery and the medium flowing in the heat supply channel.

(3) In the cogeneration system according to above (2), in the heat supply channel, the first heat exchange portion is positioned on a downstream side of the second heat exchange portion.

(4) In the cogeneration system according to above (2) or (3), the heat supply channel includes a branch channel that is positioned on a downstream side of the first heat exchange portion and that includes a heat dissipation portion.

(5) In the cogeneration system according to above (4), the branch channel is further connected to an upstream side of the second heat exchange portion in the heat supply channel.

(6) In the cogeneration system according to above (4) or (5), the heat dissipation portion is positioned in a discharge channel of the exhaust gas of the second heat exchange portion.

(7) In the cogeneration system according to any one of above (1) to (6), the fuel battery further includes a housing and a reformer. The reformer is housed in the housing, and a channel of the medium in the first heat exchange portion is provided within the housing, or provided close to the housing on the outside of the housing.

(8) The cogeneration system according to above (7) further includes: a heat-shielding mechanism that suppresses heat transferred from at least one of the reformer and the fuel battery cell to the channel in the first heat exchange portion.

(9) In the cogeneration system according to above (7), the channel of the first heat exchange portion comes into contact with the outer side of the housing.

(10) In the cogeneration system according to any one of above (1) to (9), the fuel battery includes a storage portion, an exhaust gas channel, and a heat-insulating material. The fuel battery cell is disposed in the storage portion. An exhaust gas discharged from the fuel battery cell flows through the exhaust gas channel. The heat-insulating material is disposed in contact with the exhaust gas channel and separates the storage portion from the exhaust gas channel. Within the fuel battery, the heat supply channel in the first heat exchange portion is provided in contact with the exhaust gas channel and is at least partially buried in the heat-insulating material.

(11) In the cogeneration system according to above (10), the exhaust gas channel includes, on a downstream side, a drain portion that discharges water contained in the exhaust gas and includes, on an upstream side of the drain portion, a discharge portion that discharges exhaust contained in the exhaust gas.

(12) The cogeneration system according to above (11) further includes: an oxygen-containing gas channel which is provided close to the exhaust gas channel and through which an oxygen-containing gas to be supplied to the fuel battery cell flows, in which an introduction portion connected to the oxygen-containing gas channel is positioned between the drain portion and the discharge portion.

(13) In the cogeneration system according to any one of above (10) to (12), a combustion catalyst is disposed within the storage portion or disposed upstream of the heat exchange portion in the exhaust gas channel.

(14) The cogeneration system according to any one of above (10) to (13) further includes: a control device that controls fuel utilization rate to decrease or air utilization rate to increase in the fuel battery when the medium flows in the first heat exchange portion.

### ADVANTAGEOUS EFFECT

The cogeneration system of the present disclosure configured as described above can efficiently provide the heat required for the medium.

### BRIEF DESCRIPTION OF THE DRAWINGS

FIG. 1 is a schematic view illustrating a configuration of a cogeneration system according to a first embodiment.
FIG. 2 is a schematic view illustrating the internal structure of a fuel battery illustrated in FIG. 1 when a heat-shielding mechanism is in the closed state.
FIG. 3 is a schematic view illustrating a variation of the internal structure of the fuel battery illustrated in FIG. 1 when the heat-shielding mechanism is in the closed state.
FIG. 4 is a schematic view illustrating the internal structure of the fuel battery illustrated in FIG. 1 when the heat-shielding mechanism is in the open state.
FIG. 5 is a schematic view illustrating the internal structure of a variation of the fuel battery illustrated in FIG. 1.
FIG. 6 is a perspective view of a housing of the fuel battery of the cogeneration system according to the present embodiment when a medium is flowing in a pipeline.
FIG. 7 is a perspective view of a variation of the housing of the fuel battery of the cogeneration system according to the present embodiment.
FIG. 8 is a perspective view of the housing of the fuel battery of the cogeneration system according to the present embodiment when no medium is flowing in a pipeline.
FIG. 9 is a schematic view illustrating a configuration of a cogeneration system according to a second embodiment.
FIG. 10 is a schematic view illustrating a configuration of a cogeneration system according to a third embodiment.
FIG. 11 is a schematic view illustrating a configuration of a fuel battery according to a fourth embodiment.
FIG. 12 is a view illustrating another configuration example of the fuel battery according to the fourth embodiment.
FIG. 13 is a schematic view illustrating a configuration of a cogeneration system according to the fourth embodiment.

### DESCRIPTION OF EMBODIMENTS

Embodiments of a cogeneration system to which the present disclosure is applied will be described below with reference to the drawings. In each drawing, identical or equivalent components are denoted by the same reference signs. In the following description of embodiments, explanation for identical or equivalent components will either be omitted or briefed as needed. Note that the drawings are schematic. The dimensional proportions and the like in the drawings do not necessarily match those in reality.

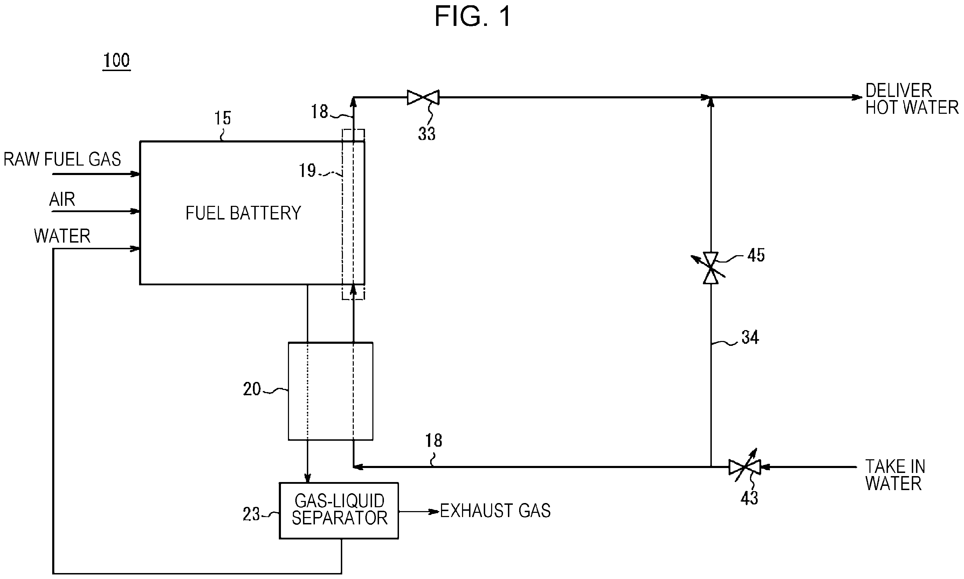

As illustrated in FIG. 1, a cogeneration system 100 according to a first embodiment of the present disclosure includes a fuel battery 15, a heat supply channel 18, and a first heat exchange portion 19. The cogeneration system 100 is installed in a home, for example. The cogeneration system 100 may further include a second heat exchange portion 20 and a heat-shielding mechanism, which is to be described later.

The fuel battery 15 generates electric power by using a raw fuel gas, air, and water. The fuel battery 15 generates heat during operation to generate electric power. The heat generated by the fuel battery 15 is recovered by using a medium. The heat supply channel 18 supplies heat to the area where the heat supply channel 18 is disposed by causing the medium to flow through it.

The fuel battery 15 may include at least one of a reformer and a cell stack (fuel battery cell). The fuel battery 15 may be a fuel cell module that contains the reformer and the cell stack within a housing. The reformer produces a fuel such as hydrogen by generating a steam reforming reaction between a gas supplied as the raw fuel and water. The cell stack is, for example, a solid oxide fuel cell (SOFC) and generates electric power through an electrochemical reaction using an oxidant such as oxygen contained in the air and the fuel produced by the reformer. Further, the cell stack produces water through the electrochemical reaction. Unreacted fuel and unreacted oxidant discharged from the cell stack are combusted to provide energy for the steam reforming reaction in the reformer. The water discharged from the cell stack is discharged from the fuel battery 15 in a high-temperature gaseous state together with the combustion gas generated by the combustion of the unreacted fuel and the unreacted oxidant. The cell stack may be a polymer electrolyte fuel cell (PEFC). In such a case, any appropriate configurations may be used as the other configurations.

The exhaust gas discharged from the fuel battery 15 may include the combustion gas and the gaseous water. The exhaust gas discharged from the fuel battery 15 may exchange heat with the medium by using the second heat exchange portion 20, which is to be described later. The exhaust gas cooled by the heat exchange may be separated into gaseous exhaust gas and condensed liquid water by a gas-liquid separator 23. The separated exhaust gas may be discharged outside the cogeneration system 100. The separated water may be sent to the fuel battery 15 as the water for the steam reforming reaction.

The heat supply channel 18 flows the medium to the first heat exchange portion 19 to recover heat. The heat supply channel 18 may flow the medium to the second heat exchange portion 20 to recover heat. The medium is a fluid with a high specific heat, such as water.

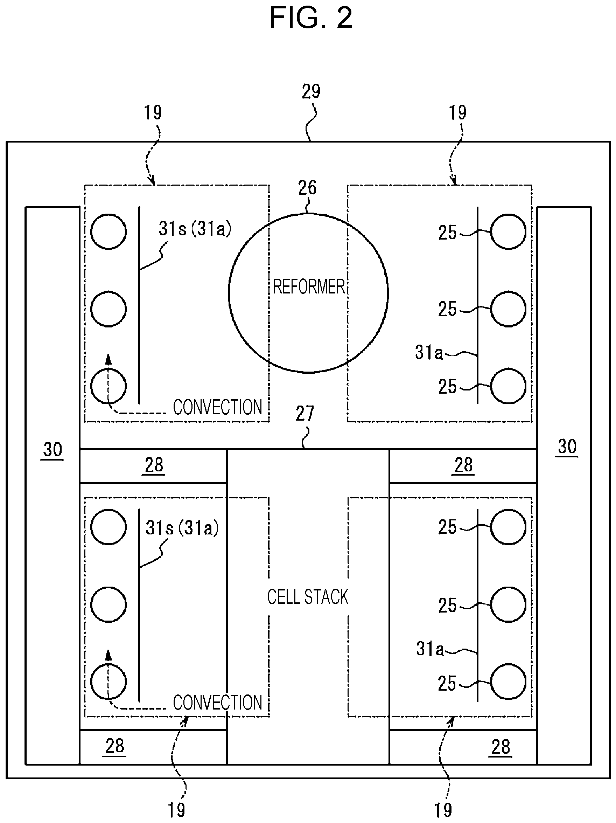

The first heat exchange portion 19 causes the medium flowing in the heat supply channel 18 to recover the heat generated by the fuel battery 15. As illustrated in FIG. 2, when the medium flowing in the heat supply channel 18 flows through a pipeline (the channel of the medium) 25, the first heat exchange portion 19 recovers heat by transferring heat from the outer surface to the medium.

The first heat exchange portion 19 may be positioned close to the outer side of the fuel battery 15 (housing) or within the fuel battery 15 (within the housing). When positioned close to the outer side of the fuel battery 15, the first heat exchange portion 19 may be disposed in contact with the outer side of the fuel battery 15 or disposed without being in contact with the fuel battery in a range where the heat from the fuel battery can be received. When positioned within the fuel battery 15, the first heat exchange portion 19 may be disposed around at least one of the reformer and the cell stack without interposing a heat-insulating material. For example, as illustrated in FIGs. 2 to 5, the first heat exchange portion 19 may be formed by providing the pipeline 25, through which the medium flowing in the heat supply channel 18 passes, around at least one of a reformer 26 and a cell stack 27. In such a case, the pipeline 25 may be provided around at least one of the reformer 26 and the cell stack 27 without interposing a heat-insulating material. In the present disclosure, the term "heat-insulating material" means a material that avoids heat transfer, and examples of the heat-insulating material include a fibrous heat-insulating material such as glass wool and a foamed heat-insulating material such as resin foam. Therefore, in the present disclosure, a heat-shielding mechanism 31 and a housing 29 to be described later are not included in the heat-insulating material. The term "without interposing a heat-insulating material" means that there is no material with heat insulating property positioned on a straight line connecting, in the shortest distance, the surface of at least a part of the pipeline 25 and the surface of at least one of the reformer 26 and the cell stack 27. Thus, even a configuration in which a packing 28 made of material with heat insulating property is positioned closer to the reformer 26 or the cell stack 27 than to the pipeline 25 can function as the first heat exchange portion 19.

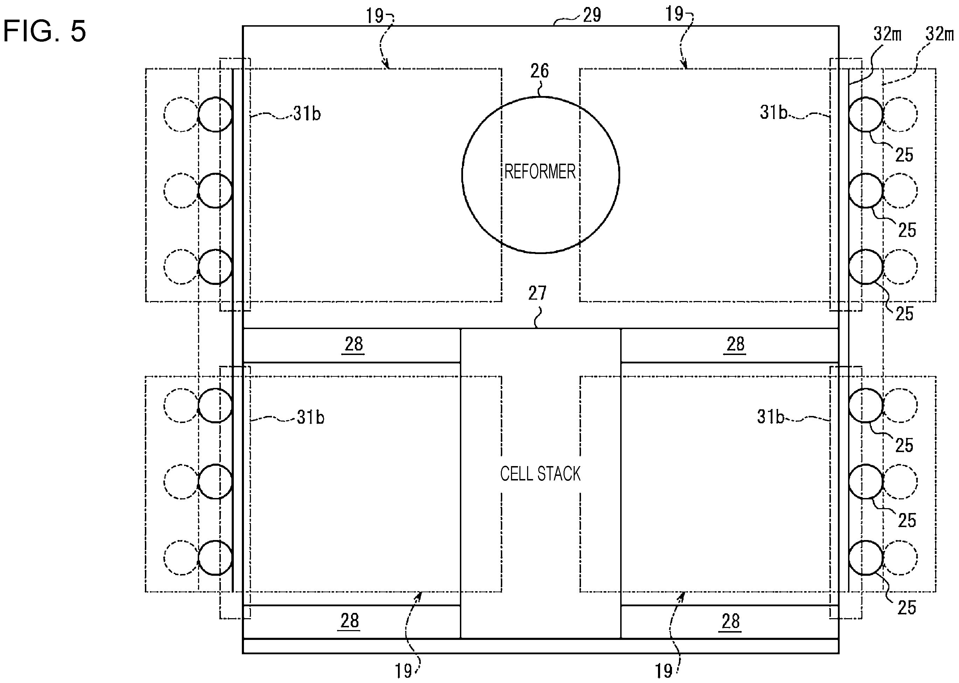

The housing 29 may be provided to house at least one of the reformer 26 and the cell stack 27. The housing 29 may be made of metal. For example, the housing 29 may cover three sides of the reformer 26 and the cell stack 27. As illustrated in FIG. 5, the pipeline 25 of the medium in the first heat exchange portion 19 may be positioned close to the outer side of the housing 29 in a range where the heat of at least one of the reformer 26 and the cell stack 27 can be transferred.

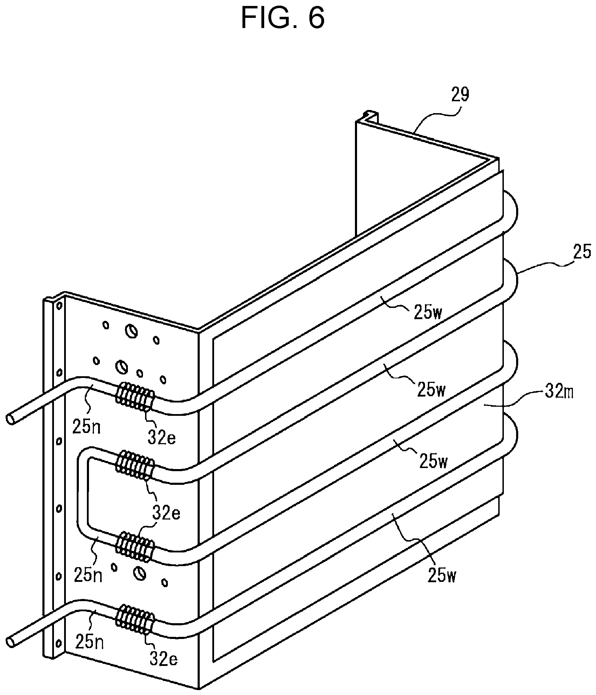

As illustrated in FIG. 6, the pipeline 25 may extend horizontally along the longitudinal surface of the housing 29 and fold back on the lateral surface to form a meandering shape. Therefore, the pipeline 25 can extend long on the outer surface of the housing 29. An inlet and an outlet of the pipeline 25 on the outer surface of the housing 29 may be oriented horizontally.

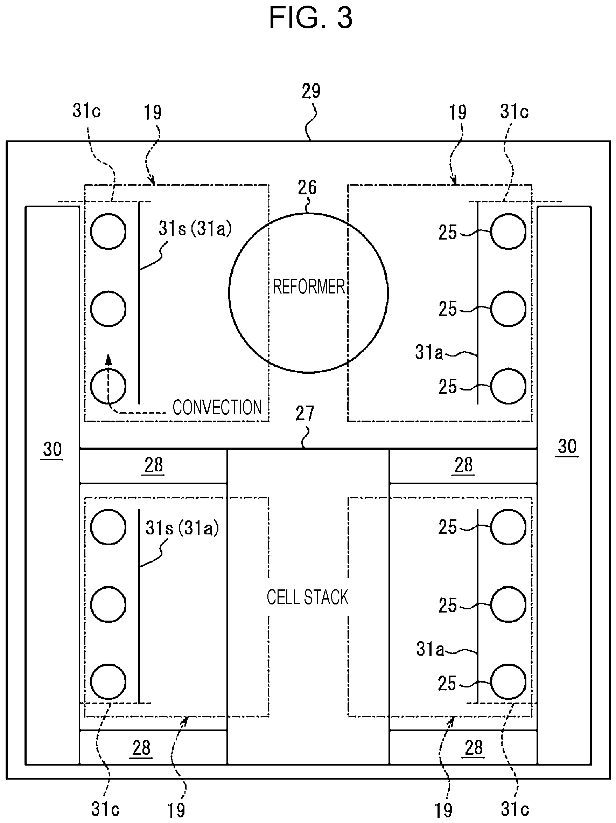

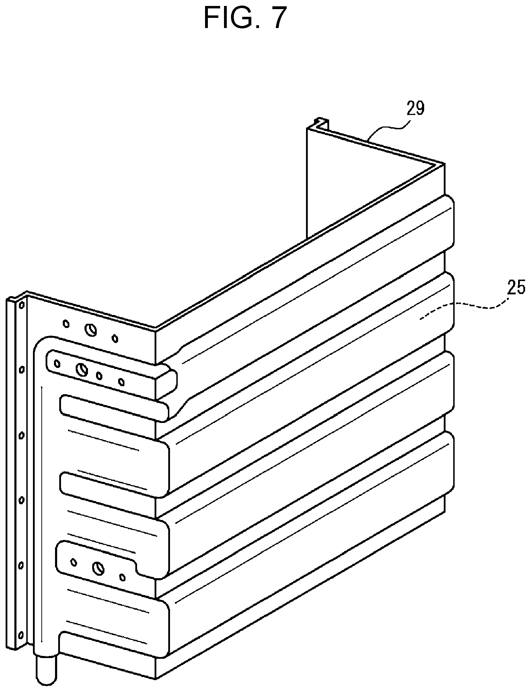

As illustrated in FIG. 7, the pipeline 25 may be provided within the housing 29. More specifically, the housing 29 may be made by pressing two plates so that the pipeline 25 is formed between the plates. The inlet and the outlet of the pipeline 25 from the inside of the housing 29 may face downward. The pipeline 25 may extend horizontally along the inner side of the longitudinal surface of the housing 29 and fold back on the inner side of the lateral surface to form a meandering shape. In the configuration where the pipeline 25 is provided within the housing 29, a heat-insulating material 30 may be positioned between the pipeline 25 and the housing 29, as illustrated in FIGs. 2 and 3.

As illustrated in FIGs. 2 to 4, the cogeneration system 100 may include heat-shielding mechanisms 31a and 31b. As illustrated in FIGs. 2 to 4, the heat-shielding mechanism 31a may include at least one heat-shielding plate 31s. The heat-shielding mechanism 31a includes, for example, a plurality of heat-shielding plates 31s. The heat-shielding plate 31s may be rectangular. The heat-shielding plate 31s may be rotatably supported on an axis on one side of the rectangle. The heat-shielding plate 31s may be switchable between a closed state and an open state. In other words, the heat-shielding mechanism 31a is a blind-like component. The heat-shielding plate 31s may block between the pipeline 25 and the reformer 26 or the cell stack 27 in the closed state. The heat-shielding plate 31s may open between the pipeline 25 and the reformer 26 or the cell stack 27 in the open state.

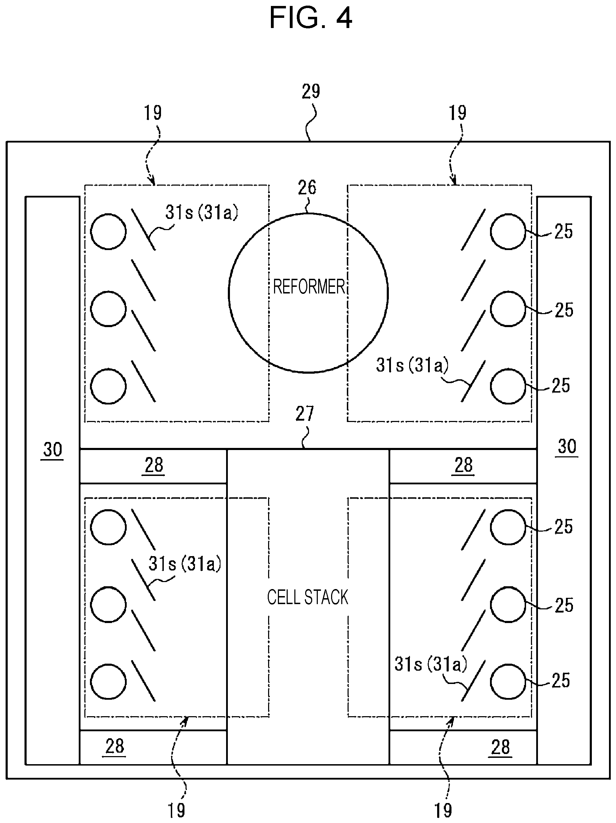

The heat-shielding mechanism 31a controls the radiation of heat from at least one of the reformer 26 and the cell stack 27 to the pipeline 25 in the first heat exchange portion 19. More specifically, as illustrated in FIG. 2, the heat-shielding mechanism 31a in the closed state blocks the radiation from the reformer 26 or the cell stack 27 and a part of the convection of the surrounding gas from the reformer 26 or the cell stack 27. Only the convection that bypasses the heat-shielding mechanism 31a may reach the pipeline 25. As illustrated in FIG. 4, the heat-shielding mechanism 31a in the open state allows the convection of the surrounding gas from the reformer 26 or the cell stack 27 to pass through, while blocking a part of the radiation from the reformer 26 or the cell stack 27.

Note that the heat-shielding mechanism 31a may be provided with a closing plate 31c, as illustrated in FIG. 3, in at least one of a position above the highest position of the pipeline 25 and a position below the lowest position of the pipeline 25. When the heat-shielding plate 31s is in the closed state, the closing plate 31c closes at least one of the vertical sides of the space between the heat-shielding plate 31s and the pipeline 25. In such a case, the closing plate 31c can stop or reduce the flow of high-temperature gas by closing at least one of the vertical sides of the space between the heat-shielding plate 31s and the pipeline 25. The closing plate 31c, like the heat-shielding plate 31s, may include a plurality of plates each supported in a rotatable manner and may be switchable between the closed state and the open state. The closing plate 31c may be a single plate.

As illustrated in FIG. 5, the heat-shielding mechanism 31b may be configured by positioning the pipeline 25 outside of the housing 29. The pipeline 25, which functions as the channel of the first heat exchange portion 19, can come into contact with the outer side of the housing 29.

More specifically, the pipeline 25 is attached to a plate-shaped movable member 32m. The movable member 32m may translate to be separated from or come close to the housing 29. The movable member 32m in contact with the housing 29 is indicated by a solid line, and the movable member 32m separated from the housing 29 is indicated by a dotted line. The housing 29 is heated to about 400°C to about 600°C, for example, by radiation from the reformer 26 or the cell stack 27 or by convection of the exhaust gas. When the movable member 32m is in contact with the housing 29, the pipeline 25 attached to the movable member 32m is heated more strongly. On the other hand, when the movable member 32m is separated from the housing 29, the heating to the pipeline 25 is weakened.

The operation of the heat-shielding mechanism for heat transfer adjustment may be realized by a motor. The operation of the heat-shielding mechanism may be realized by a bimetal obtained by laminating plates with different coefficients of thermal expansion. The operation of the heat-shielding mechanism may be realized by a thermoelement containing wax. The operation of the heat-shielding mechanism is, for example, switching the state of the heat-shielding mechanism 31a or displacing the movable member 32m.

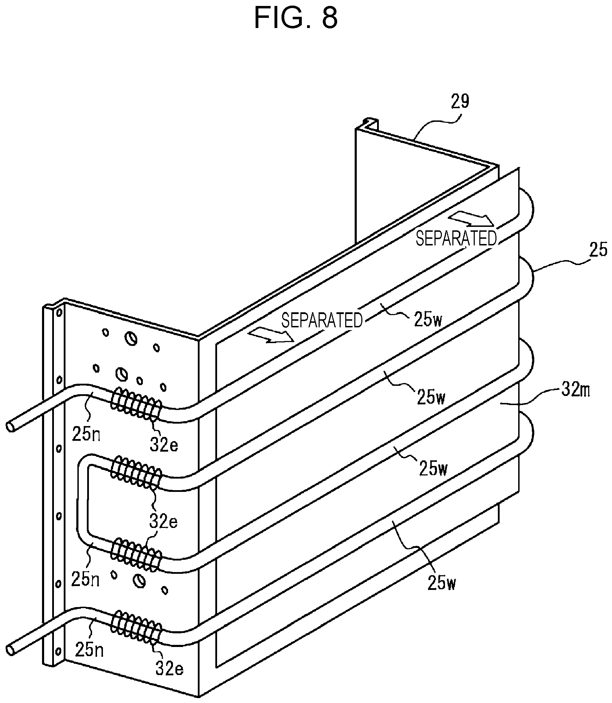

The operation of the heat-shielding mechanism may be realized by an elastic member and the pressure of the heat medium. Specific examples of a heat-shielding mechanism that can be based on the elastic member and the pressure of the heat medium are described below. Referring to FIGs. 6 and 8, the pipeline 25 may include a first portion 25n, a second portion 25w, and a spring (elastic body) 32e. The first portion 25n may be fixed to the housing 29 or may be positioned without being in contact with the housing 29 in a range where the heat from the fuel battery can be received. The second portion 25w may extend horizontally along the longitudinal surface of the housing 29. The first portion 25n and the second portion 25w may be cylindrical. The diameter of the first portion 25n may be smaller than the diameter of the second portion 25w. Alternatively, the diameter of the first portion 25n may be larger than the diameter of the second portion 25w. One of the first portion 25n and the second portion 25w may be connected, on the lateral surface of the housing 29, to the other of the first portion 25n and the second portion 25w in a state in which the aforesaid other is slidably inserted along the axial direction into the aforesaid one. The spring 32e may be provided to bias the second portion 25w toward the first portion 25n. The spring 32e may be wound around the first portion 25n.

When the spring 32e contracts, the second portion 25w may come into contact with the longitudinal surface of the housing 29 directly or via a movable member to be described later. When the spring 32e contracts, the second portion 25w may be close to the longitudinal surface of the housing 29 in a range where the heat from a fuel battery 16 can be received. On the other hand, when the spring 32e extends, the second portion 25w may be separated from the longitudinal surface of the housing 29.

The pipeline 25 is subjected to the static pressure of the medium in the pipeline 25. The static pressure exerts a force in the direction that causes the spring 32e to extend. Thus, in response to the increase in static pressure, the medium exerts a force on the second portion 25w to cause the spring 32e to extend. When the static pressure decreases, the force exerted by the medium on the pipeline 25 becomes weaker. The force exerted by the medium to separate the second portion 25w of the pipeline 25 from the first portion 25n may also become weaker. Thus, the spring 32e may contract, so that the second portion 25w is brought close to the longitudinal surface of the housing 29. In contrast, when the static pressure increases, the force exerted by the medium to separate the second portion 25w of the pipeline 25 from the first portion 25n may become stronger. Thus, the spring 32e may extend to separate the second portion 25w from the longitudinal surface of the housing 29.

The pipeline 25 may be fixed to the movable member 32m, which is a connecting plate facing the longitudinal surface of the housing 29. Such a configuration can avoid a situation in which excessive load is applied to the pipeline 25. An elastic body may be provided between the movable member 32m and the housing 29. Further, a part of the pipeline 25 may be the elastic body. With such a configuration, by opening a hot water delivery valve 33, the elastic body of the pipeline 25 may contract to bring the pipeline 25 into contact with the longitudinal surface of the housing 29. By opening the hot water delivery valve 33, the elastic body of the pipeline 25 may contract to bring the pipeline 25 close to the longitudinal surface of the housing 29 in a range where the heat from the fuel battery 16 can be received. By closing the hot water delivery valve 33, the elastic body of the pipeline 25 may extend to separate the pipeline 25 from the longitudinal surface of the housing 29.

For power generation in the fuel battery 15, the temperature of each of the reformer 26 and the cell stack 27 needs to be maintained within an ideal temperature range. By using the first heat exchange portion 19 including the configuration described above, the reformer 26 and the cell stack 27 are cooled by the heat medium. Therefore, the fuel battery 15 generates not only the heat needed to generate electric power, but also the heat to heat the heat medium. In such a configuration, when the supply of the medium is stopped, the reformer 26 and the cell stack 27 are cooled by the heat exchange in the first heat exchange portion 19, while heating of the heat medium is not required. On the other hand, since the heat-shielding mechanism can adjust the amount of heat exchanged in the first heat exchange portion 19, cooling of the reformer 26 and the cell stack 27 can be suppressed when heating of the heat medium is not required. Thus, by using the heat-shielding mechanism, since the amount of the raw fuel gas to be supplied to the fuel battery 15 can be reduced when heating of the heat medium is not required, the power generation efficiency can be increased.

As illustrated in FIG. 1, the second heat exchange portion 20 is, for example, a heat exchanger. The second heat exchange portion 20 exchanges heat between the exhaust gas discharged from the fuel battery 15 and the medium flowing in the heat supply channel 18. The second heat exchange portion 20 may be positioned on the upstream side of the first heat exchange portion 19 in the heat supply channel 18. The temperature of the exhaust gas discharged from the fuel battery 15 is generally lower than the temperature around the reformer 26 and the cell stack 27 (for example, the temperature of the exhaust gas discharged from the fuel battery 15 is from about 200°C to about 300°C). Thus, the second heat exchange portion 20 functions as a preheater of the medium with respect to the first heat exchange portion 19.

The heat supply channel 18 is, for example, a hot water supply channel. In the heat supply channel 18, on the upstream side of the second heat exchange portion 20, a first flow regulating valve 43 may be provided to adjust the supply amount of the medium. In the heat supply channel 18, the hot water delivery valve 33 may be provided on the downstream side of the first heat exchange portion 19. The pressure of the medium may be adjusted higher at the upstream end of the heat supply channel 18 than at the downstream end. For example, the upstream end of the heat supply channel 18 may be connected to a high-pressure clean water pipe. The hot water delivery valve 33 opens to allow the medium to flow to the downstream side. When the hot water delivery valve 33 is open, the static pressure of the medium in the pipeline 25 on the upstream side of the hot water delivery valve 33 decreases. When the hot water delivery valve 33 is closed, the static pressure of the medium in the pipeline 25 on the upstream side of the hot water delivery valve 33 is lower than when the hot water delivery valve 33 is open. Therefore, the static pressure of the medium in the pipeline 25 may be adjusted by opening and closing the hot water delivery valve 33. The heat-shielding mechanism described above may be operated by adjusting the static pressure of the medium in the pipeline 25. More specifically, when the hot water delivery valve 33 is open (see FIG. 6), the spring 32e may contract, so that the second portion 25w approaches the longitudinal surface of the housing 29. When the hot water delivery valve 33 is closed (see FIG. 8), the spring 32e may extend to separate the pipeline 25 from the longitudinal surface of the housing 29.

A low-temperature delivery channel 34 may branch off from the heat supply channel 18 between the first flow regulating valve 43 and the second heat exchange portion 20. The low-temperature delivery channel 34 may bypass the second heat exchange portion and the first heat exchange portion. A second flow regulating valve 45 may be provided in the low-temperature delivery channel 34 to adjust the supply amount of the medium. By adjusting the flow rate of the medium branching out into the low-temperature delivery channel 34 with the second flow regulating valve 45, the temperature of the medium to be delivered from the heat supply channel 18 can be adjusted. By mixing the low-temperature medium flowing in the low-temperature delivery channel 34 with the high-temperature medium flowing in the heat supply channel 18, a medium that is cooler than the heat supply channel 18 can be delivered.

More specifically, the heat supply channel 18 heats the clean water supplied from outside the facility where the cogeneration system 100 is installed by flowing the clean water to a heat exchange portion, such as the first heat exchange portion 19 and supplies the hot water to a consumer facility, for example.

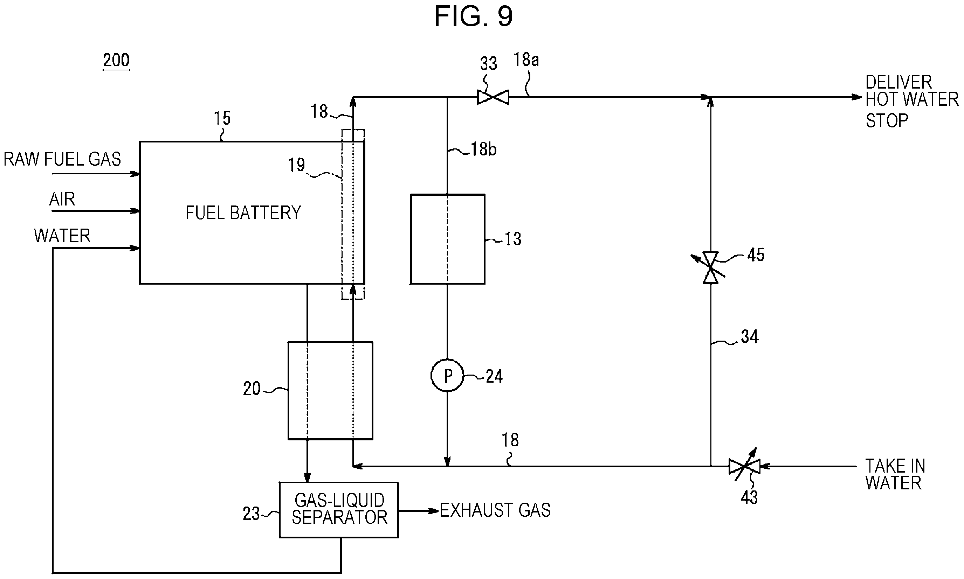

As illustrated in FIG. 9, a cogeneration system 200 according to a second embodiment of the present disclosure includes configurations similar to those of the cogeneration system 100. Hereinafter, the same configurations as in the cogeneration system 100 will not be described again, and configurations that differ from the cogeneration system 100 will be described.

The heat supply channel 18 branches, on the downstream side of the fuel battery 15, into a hot water delivery channel 18a and a circulation channel 18b.

The circulation channel 18b may be provided with a heat dissipation portion 13. The heat dissipation portion 13 is, for example, a radiator, which dissipates heat from the medium by exchanging heat between the air supplied by a blower and the medium.

A pump 24 may be provided on the downstream side of the heat dissipation portion 13. The pump 24 may boost the pressure so that the medium flows from the heat dissipation portion 13 to the second heat exchange portion 20.

The second heat exchange portion 20 may be positioned on the downstream side of the pump 24. The first heat exchange portion 19 may be positioned on the downstream side of the second heat exchange portion 20.

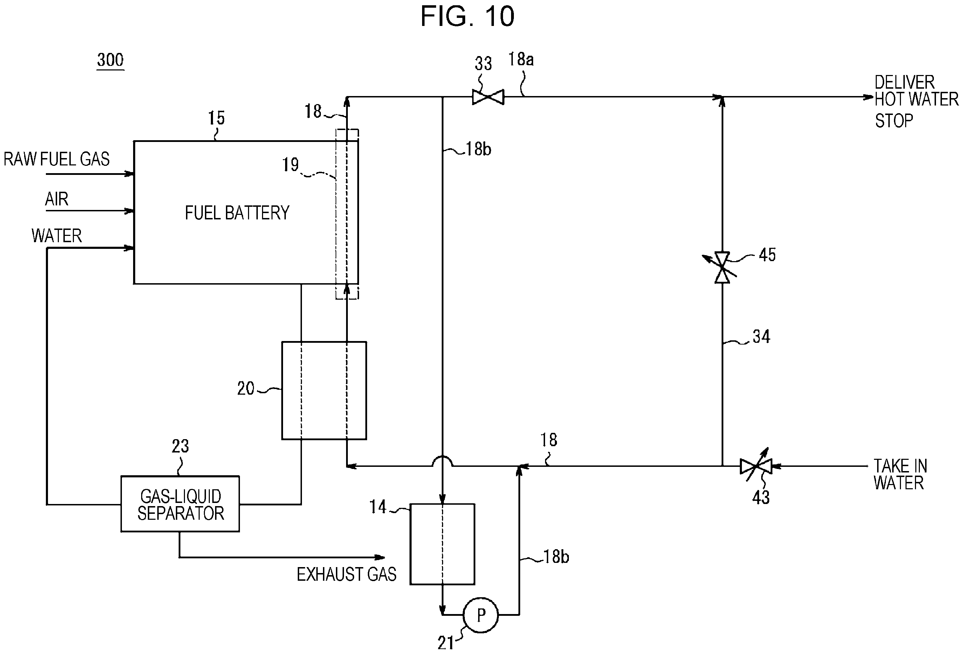

As illustrated in FIG. 10, a cogeneration system 300 according to a third embodiment of the present disclosure includes configurations similar to those of the cogeneration system 200. Hereinafter, the same configurations as in the cogeneration system 200 will not be described again, and configurations that differ from the cogeneration system 200 will be described.

The circulation channel 18b may be provided with a heat dissipation portion 14. The heat dissipation portion 14 is, for example, a radiator. The heat dissipation portion 14 is positioned in a discharge channel of the exhaust gas of the second heat exchange portion 20. More specifically, the heat dissipation portion 14 is positioned in the discharge channel of the exhaust gas of the second heat exchange portion 20, at a position downstream from the gas-liquid separator 23.

A pump 21 may be provided on the downstream side of the heat dissipation portion 14. The circulation channel 18b may merge, on the downstream side of the pump 21, with the heat supply channel 18. The pump 21 may boost the pressure so that the medium flows from the heat dissipation portion 14 to the second heat exchange portion 20.

The cogeneration systems 100, 200 and 300 of the present embodiments with the above configuration each include the first heat exchange portion 19 that is positioned close to the outer side of the fuel battery 15 or within the fuel battery 15 to allow the medium flowing in the heat supply channel 18 to recover the heat generated by the fuel battery 15. In a typical cogeneration system using a fuel battery, waste heat is recovered by exchanging heat between the exhaust gas of the fuel battery and the medium, but it is difficult to heat the medium sufficiently, so that it is difficult to supply a large amount of hot water temporarily. In a cogeneration system that recovers waste heat from exhaust gas but has difficulty supplying a large amount of hot water temporarily, a water heater needs to be installed to meet the demand for supplying a large amount of hot water temporarily. On the other hand, in the cogeneration systems 100, 200 and 300 of the present embodiments with the above-described configuration, since the fuel battery 15 itself generally operates at a higher temperature than the exhaust gas, a larger amount of heat can be recovered than in the configuration in which the waste heat is recovered from the exhaust gas. Thus, the cogeneration systems 100, 200 and 300 can supply a large amount of hot water temporarily. Therefore, in the cogeneration systems 100, 200 and 300, since it is possible to supply a large amount of hot water temporarily, it is not necessary to install a water heater. Thus, the cogeneration systems 100, 200 and 300 can be made smaller in size.

The cogeneration systems 100, 200 and 300 of the present embodiments each include the second heat exchange portion 20 that exchanges heat between the exhaust gas of the fuel battery 15 and the medium flowing in the heat supply channel 18. With such a configuration, in the cogeneration systems 100, 200 and 300, the temperature of the exhaust gas of the fuel battery 15 can be lowered.

In the heat supply channel 18 of the cogeneration systems 100, 200 and 300 according to the present embodiments, the first heat exchange portion 19 is positioned on the downstream side of the second heat exchange portion 20. With such a configuration, after being heated in the second heat exchange portion 20, the medium flows into the first heat exchange portion 19 where the heat generated by the fuel battery 15 is recovered. Therefore, a situation in which the low-temperature medium takes a large amount of heat away from the fuel battery 15 can be avoided. Thus, the power generation efficiency of the fuel battery 15 can be maintained.

The heat supply channel 18 of the cogeneration systems 200 and 300 according to the present embodiments includes the circulation channel 18b as a branch channel that is located on the downstream side of the first heat exchange portion 19 and includes the heat dissipation portions 13 and 14. With such a configuration, the cogeneration systems 200 and 300 can cool the heat accumulated in the medium when the hot water is not being supplied. Thus, the cogeneration systems 200 and 300 can avoid extreme reduction in the recovery amount of the water from the exhaust gas.

The heat dissipation portion 14 of the heat supply channel 18 of the cogeneration system 300 according to the present embodiment is positioned in the discharge channel of the exhaust gas of the second heat exchange portion 20. With such a configuration, the need for a blower or the like to cool the heat dissipation portion 14 is eliminated, so that it is possible to simplify the configuration and reduce manufacturing cost.

The fuel battery 15 of the cogeneration systems 100, 200 and 300 according to the present embodiments is further provided with the housing 29 and at least one of the reformer 26 and the cell stack 27 housed in the housing 29, and the channel of the medium in the first heat exchange portion 19 is provided within the housing 29 or close to the housing 29 on the outside of the housing 29. With such a configuration, in the first heat exchange portion 19, the medium can be close to the high-temperature area of the housing 29 or the area surrounding the high-temperature area. Therefore, the medium can be heated more efficiently in the first heat exchange portion 19.

Further, the cogeneration systems 100, 200 and 300 according to the present embodiments include a heat-shielding mechanism 31 that suppresses heat transfer from at least one of the reformer 26 and the cell stack 27 to the pipeline 25, which functions as a channel in the first heat exchange portion 19. With such a configuration, excessive heating of the pipeline 25 can be suppressed.

The pipeline 25, as the channel of the first heat exchange portion 19 of the cogeneration systems 100, 200 and 300 according to the present embodiments, can come into contact with the outer side of the housing 29. With such a configuration, the pipeline 25 can be positioned on the outer side of the housing 29 while the pipeline 25 (i.e., the medium) can be heated more strongly.

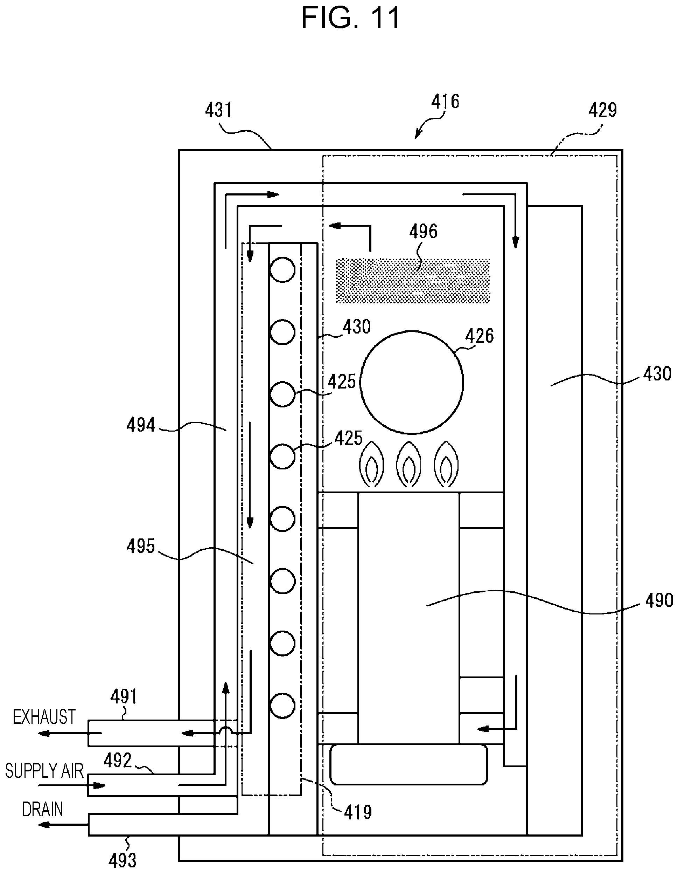

FIG. 11 is a schematic view illustrating a configuration of a fuel battery applied to a cogeneration system according to a fourth embodiment.

A fuel battery 416 of the cogeneration system generates electric power by a fuel battery cell 490 (cell stack) and uses the heat generated to raise the temperature of the medium.

The fuel battery 416 includes the fuel battery cell 490, a storage portion 429, an exhaust gas channel 495, and a heat-insulating material 430. The fuel battery 416 includes an oxygen-containing gas channel 494. The fuel battery 416 may be provided with a reformer 426.

The fuel battery cell 490 is disposed in the storage portion 429 of the fuel battery 416. In the present embodiment, the fuel battery 416 contains the reformer 426 and the fuel battery cell 490 in the storage portion 429. The storage portion 429 may be included in a housing 431. Specifically, the storage portion 429 may be a part of the inner wall of the housing 431 and a part of the heat-insulating material 430 to be described later. The aforesaid a part of the inner wall of the housing 431 and a part of the heat-insulating material may define the inner space of the storage portion 429. More specifically, the housing 431, which is made of metal, may define a part of the boundary of the storage portion 429. For example, the housing 431 may define the remaining three sides (the sides not adjacent to the exhaust gas channel 495) of the storage portion 429, the cross-section of which is rectangular. The heat-insulating material 430 may define the other part of the boundary of the storage portion 429. For example, the heat-insulating material 430 may define one side of the cross-section of the storage portion 429. The reformer 426 produces a fuel such as hydrogen by generating a steam reforming reaction between a gas supplied as the raw fuel and water. The fuel battery cell 490, which is, for example, a solid oxide fuel cell (SOFC), generates electric power through an electrochemical reaction using an oxidant, such as oxygen contained in the air, and the fuel produced by the reformer 426. The fuel battery 416 generates heat during the operation to generate electric power. The fuel battery cell 490 produces water through the electrochemical reaction. Unreacted fuel and unreacted oxidant discharged from the fuel battery cell 490 are combusted to provide energy for the steam reforming reaction in the reformer 426. The water discharged from the fuel battery cell 490 is discharged from the fuel battery 416 in a high-temperature gaseous state together with the combustion gas generated by the combustion of the unreacted fuel and the unreacted oxidant. The heat generated during the operation for power generation and the heat of the combustion are recovered by the medium as heat generated by the fuel battery 416. Here, the fuel battery cell 490 may be a polymer electrolyte fuel cell (PEFC).

In the fuel battery 416, the exhaust gas discharged from the fuel battery cell 490 flows through the exhaust gas channel 495 to be discharged. The exhaust gas includes at least one selected from the group consisting of the fuel gas that has not been used to generate electric power, the combustion gas (exhaust, gaseous) generated by the combustion of the fuel gas discharged from the fuel battery cell 490, and the gaseous water. In the fuel battery 416, the heat-insulating material 430 is disposed in contact with the exhaust gas channel 495, and separates the storage portion 429 from the exhaust gas channel 495. The heat-insulating material 430 is a material that avoids heat transfer and may be, for example, a fibrous heat-insulating material such as glass wool or a foamed heat-insulating material such as resin foam.

The exhaust gas channel 495 includes, on the downstream side, a drain portion 493 that discharges the water contained in the exhaust gas. The exhaust gas channel 495 includes, on the upstream side of the drain portion 493, a discharge portion 491 that discharges the exhaust contained in the exhaust gas. The oxygen-containing gas channel 494 is provided close to the exhaust gas channel 495, and an oxygen-containing gas to be supplied to the fuel battery cell 490 flows through the oxygen-containing gas channel 494. An introduction portion 492 connected to the oxygen-containing gas channel 494 is positioned between the drain portion 493 and the discharge portion 491. The exhaust gas flowing through the exhaust gas channel 495 is cooled by the oxygen-containing gas in the nearby oxygen-containing gas channel 494. From the cooled exhaust gas, liquid water (drain) generated by condensation of moisture is discharged from the drain portion 493, and gas is discharged from the discharge portion 491. The water separated and discharged from the drain portion 493 may be sent to the fuel battery 416 as the water to be used for the steam reforming reaction in the reformer 426. With such a configuration of the fuel battery 416, since the water to be used for the steam reforming reaction can be separated from the exhaust gas without providing a gas-liquid separator, the system can be reduced in size as a whole. In other words, in FIGs. 1, 9 and 10, the gas-liquid separator 23 can be eliminated.

The exhaust gas is cooled by heat exchange with the oxygen-containing gas in the oxygen-containing gas channel 494. On the other hand, the oxygen-containing gas is heated by heat exchange with the exhaust gas. Since the heated oxygen-containing gas flows into the reformer 426 and the fuel battery cell 490, cooling of the reformer 426 and the fuel battery cell 490 can be reduced. Therefore, the temperature of the fuel battery cell 490 and the reformer 426 can be kept high. Thus, the power generation efficiency of the fuel battery cell 490 and the reformer 426 can be maintained.

A heat supply channel 425 is positioned within the fuel battery 416 (within the storage portion 429). In the present embodiment, the heat supply channel 425 is provided in contact with the exhaust gas channel 495, and the medium flows through the heat supply channel 425. The heat supply channel 425 is at least partially buried in the heat-insulating material 430. At least a part of the heat supply channel 425 may be exposed to the exhaust gas channel 495. As illustrated in FIG. 11, in the present embodiment, the heat supply channel 425 is buried in the heat-insulating material 430. The exhaust gas channel 495 and the heat supply channel 425 provided in contact with the exhaust gas channel 495 constitute a first heat exchange portion 419 corresponding to the first heat exchange portion 19 described in the first embodiment to third embodiment. With such a configuration of the fuel battery 416, since the heat generated by the fuel battery 416 in the high-temperature interior of the storage portion 429 can be efficiently recovered by the medium, effective use of heat becomes possible.

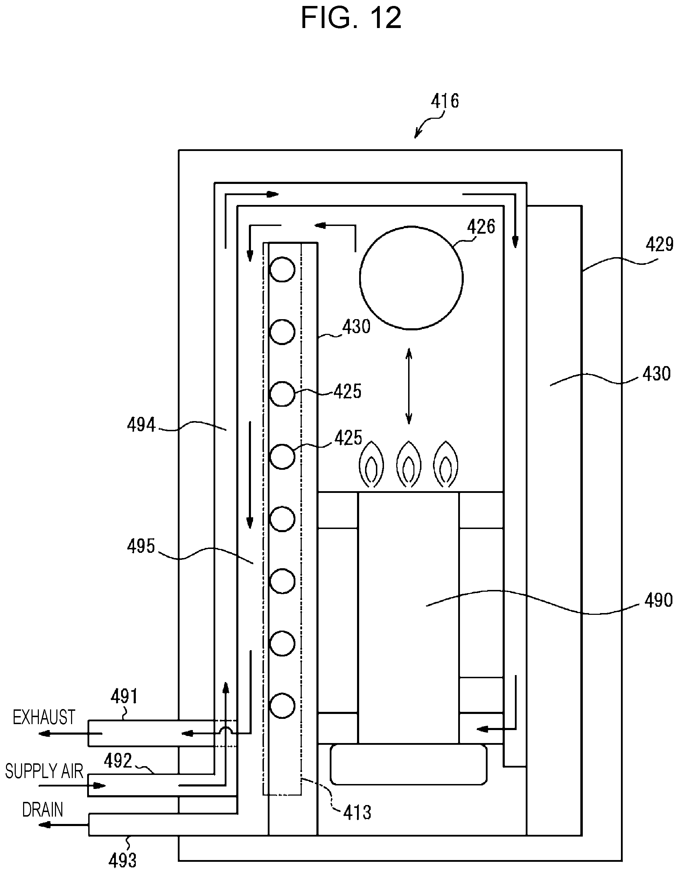

Here, a combustion catalyst 496 may be used to promote combustion of the exhaust gas. In the fuel battery 416 according to the present embodiment, the combustion catalyst 496 is disposed within the storage portion 429, or disposed upstream of the heat supply channel 425 in the exhaust gas channel 495. Here, as another example, the fuel battery 416 can be configured without using the combustion catalyst 496. When the combustion catalyst 496 is not used, a combustion distance L between the combustion portion and the reformer 426 is preferably large so that the air amount is sufficient, as illustrated in FIG. 12.

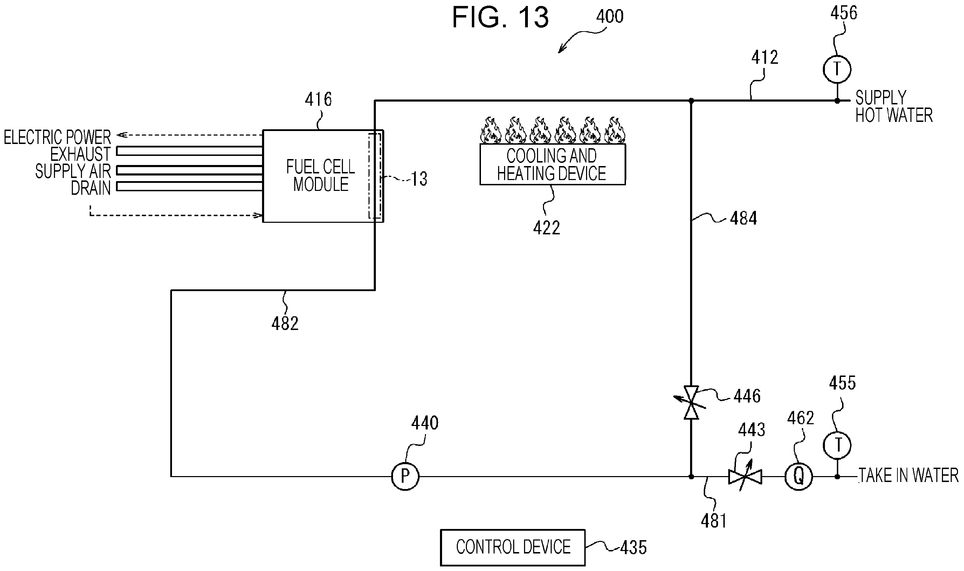

As illustrated in FIG. 13, a cogeneration system 400 according to an embodiment of the present disclosure includes the fuel battery 416 described above. The cogeneration system 400 is a hot water supply system. In other words, in the fuel battery 416, the medium flowing in the heat supply channel 425 is water to be supplied as hot water. For example, the cogeneration system 400 may include a heating system. In such a case, the medium flowing in the heat supply channel 425 may circulate through the heating system, and the medium may be water, an antifreeze, or the like. In other words, the medium flowing in the heat supply channel 425 may be supplied directly or indirectly to the user.

The cogeneration system 400 includes a plurality of channels through which water flows, the fuel battery 416 including the heat supply channel 425, and a control device 435. The cogeneration system 400 may include a cooling and heating device 422. The cogeneration system 400 is installed in a home, for example.

The cogeneration system 400 according to the present embodiment includes, as the plurality of channels through which water flows, an external water channel 81, a hot water supply channel 412, a heat exchange channel 482, and a water channel 484.

The external water channel 481 is a channel through which water supplied from outside the cogeneration system 400 flows. In the external water channel 481, a temperature sensor 455 may be provided to measure the temperature of the water flowing into the external water channel 481. Further, a flow rate sensor 462 may be provided to measure the amount of the water flowing into the external water channel 481. The external water channel 481 may be provided with a first flow regulating valve 443 to adjust the supply amount of the water.

The hot water supply channel 412 is a channel that supplies heated water (hot water) to the outside. A temperature sensor 456 may be provided to measure the temperature of the water at the outlet of the hot water supply channel 412.

The heat exchange channel 482 is a channel that connects the external water channel 481 and the hot water supply channel 412 and passes through the heat supply channel 425.

The water channel 484 is another channel that connects the external water channel 481 and the hot water supply channel 412. The water channel 484 may be provided with a second flow regulating valve 446 that adjusts the amount of the water passing through the water channel 484.

In the cogeneration system 400, the water from the hot water supply channel 412 may flow through the water channel 484 into the external water channel 481 to circulate. A circulation pump 440 may be provided in the external water channel 481 to boost the pressure to circulate the water.

The cooling and heating device 422 is provided in the vicinity of the hot water supply channel 412 to heat or cool the water flowing in the hot water supply channel 412. The cooling and heating device 422 may be, for example, a burner, an electric heater or the like. The cooling and heating device 422 may be, for example, a burner including a fuel injection line that supplies a gaseous fuel and an air supply line that forcibly draws in the outside air by using a blower and supplies the drawn air. The cooling and heating device 422 mixes, at the ignition port, the gaseous fuel and the outside air, and combusts the mixture. The water is heated by the combustion of the cooling and heating device 422. Further, the cooling and heating device 422 can generate wind with a blower to cool the water. With the cooling and heating device 422, the temperature of the hot water to be supplied to the outside can be further appropriately adjusted.

The control device 435 includes one or more processors and memories. The processors may include a general-purpose processor that is loaded with specific programs to perform specific functions and a dedicated processor dedicated to specific processing. The dedicated processors may include an application specific integrated circuit (ASIC). The processors may include a programmable logic device (PLD). The PLD may include a field-programmable gate array (FPGA). The control device 35 may be either a system-on-a-chip (SoC) or a system in a package (SiP) in which one or more processors corporate with each other. The control device 435 may control the components of the cogeneration system 400, such as the circulation pump 440, the first flow regulating valve 443, the second flow regulating valve 446, and the cooling and heating device 422. In the present embodiment, the control device 435 controls the operation of the fuel battery 416.

The control device 435 controls the components of the cogeneration system 400, including the fuel battery 416, in response to the demand for hot water. For example, when there is a continuous demand for hot water, the control device 435 controls the first flow regulating valve 443 and the second flow regulating valve 446 to flow the medium (water) in the heat supply channel 425. At this time, the control device 435 controls the fuel utilization rate to decrease or the air utilization rate to increase in the fuel battery 416. Specifically, the control device 435 may cause the fuel utilization rate to decrease by increasing the fuel supply rate, and cause the fuel that remains unconsumed by the fuel battery 416 to be combusted. Such control makes it difficult for the temperature within the fuel battery 416 to drop, so that the heat can be used effectively.

With the above-described configuration, the fuel battery 416 and the cogeneration system 400 according to the present embodiment can make effective use of heat and achieve size reduction. Therefore, the fuel battery 416 and the cogeneration system 400 according to the present embodiment are suitable for household cogeneration systems requiring compactness and size reduction.

Note that the drawings used in the description of the embodiments according to the present disclosure are schematic drawings, and the dimensional proportions and the like in the drawings do not necessarily match those in reality.

Although the embodiments pertaining to the present disclosure have been described based on the drawings and examples, it is to be noted that various variations and changes may be made by those who are ordinarily skilled in the art based on the present disclosure. Thus, it is to be noted that these variations or changes are included within the scope of the present disclosure. For example, functions and the like included in each component or the like can be rearranged without logical inconsistency, and a plurality of components or the like can be combined into one or divided.

All the components described in the present disclosure and/or all the disclosed methods or all the processing steps may be combined based on any combination except for the combination where these features are exclusive with each other. Further, each of the features described in the present disclosure may be replaced with an alternative feature for achieving the same purpose, an equivalent purpose, or a similar purpose, unless explicitly denied. Therefore, each of the disclosed features is merely an example of a comprehensive series of identical or equal features, unless explicitly denied.

The embodiments according to the present disclosure are not limited to any of the specific configurations in the embodiments described above. The embodiments according to the present disclosure can be extended to all the novel features described in the present disclosure or a combination thereof, or to all the novel methods described in the present disclosure, the processing steps, or a combination thereof.

The descriptions such as "first" and "second" in the present disclosure are identifiers for distinguishing corresponding configurations. Configurations distinguished by the descriptions such as "first" and "second" in the disclosure can exchange numbers in the corresponding configurations. For example, the first heat exchange portion can exchange "first" and "second", which are identifiers, with the second heat exchange portion. The exchange of identifiers takes place at the same time. Even after exchanging identifiers, the corresponding configuration is distinguished. The identifier may be deleted. The configuration with the identifier deleted is distinguished by a reference sign. It should not be used as a basis for interpreting the order of the corresponding configurations and the existence of identifiers with lower numbers, based on the description of identifiers such as "first" and "second" in this disclosure.

The embodiments according to the present disclosure are not limited to any of the specific configurations in the embodiments described above. The embodiments according to the present disclosure can be extended to all the novel features described in the present disclosure or a combination thereof.

### REFERENCE SIGNS

- 100, 200, 300, 400: cogeneration system
- 13, 14: heat dissipation portion
- 15, 416: fuel battery
- 18: heat supply channel
- 18a: hot water delivery channel
- 18b: circulation channel
- 19, 419: first heat exchange portion
- 20: second heat exchange portion
- 21, 24: pump
- 23: gas-liquid separator
- 25, 425: pipeline
- 25n: first portion
- 25w: second portion
- 26, 426: reformer
- 27: cell stack
- 28: packing
- 29: housing
- 30: heat-insulating material
- 31a, 31b: heat-shielding mechanism
- 32m: movable member
- 33: hot water delivery valve
- 34: low-temperature delivery channel
- 43: first flow regulating valve
- 45: second flow regulating valve
- 412: hot water supply channel
- 422: cooling and heating device
- 429: storage portion
- 430: heat-insulating material
- 431: housing
- 435: control device
- 440: circulation pump
- 443: first flow regulating valve
- 446: second flow regulating valve
- 455: temperature sensor
- 456: temperature sensor
- 462: flow rate sensor
- 481: external water channel
- 482: heat exchange channel
- 484: water channel
- 490: fuel battery cell
- 491: discharge portion
- 492: introduction portion
- 493: drain portion
- 494: oxygen-containing gas channel
- 495: exhaust gas channel
- 496: combustion catalyst

## Claims

1. A cogeneration system comprising:
a fuel battery that houses a fuel battery cell;
a heat supply channel that causes a medium that recovers heat generated by the fuel battery to flow therein; and
a first heat exchange portion that is positioned close to an outer side of the fuel battery or positioned within the fuel battery to cause the medium flowing in the heat supply channel to recover the heat generated by the fuel battery.

2. The cogeneration system according to claim 1, further comprising:
a second heat exchange portion that exchanges heat between an exhaust gas of the fuel battery and the medium flowing in the heat supply channel.

3. The cogeneration system according to claim 2, wherein in the heat supply channel, the first heat exchange portion is positioned on a downstream side of the second heat exchange portion.

4. The cogeneration system according to claim 2 or 3, wherein the heat supply channel comprises a branch channel that is positioned on a downstream side of the first heat exchange portion and that comprises a heat dissipation portion.

5. The cogeneration system according to claim 4, wherein the branch channel is further connected to an upstream side of the second heat exchange portion in the heat supply channel.

6. The cogeneration system according to claim 4 or 5, wherein the heat dissipation portion is positioned in a discharge channel of the exhaust gas of the second heat exchange portion.

7. The cogeneration system according to any one of claims 1 to 6, wherein
the fuel battery further comprises a housing and a reformer housed in the housing, and
a channel of the medium in the first heat exchange portion is provided within the housing, or provided close to the housing on an outside of the housing.

8. The cogeneration system according to claim 7, further comprising:
a heat-shielding mechanism that suppresses heat transferred from at least one of the reformer and the fuel battery cell to the channel in the first heat exchange portion.

9. The cogeneration system according to claim 7, wherein the channel of the first heat exchange portion comes into contact with an outer side of the housing.

10. The cogeneration system according to any one of claims 1 to 9, wherein
the fuel battery comprises a storage portion in which the fuel battery cell is disposed, an exhaust gas channel through which an exhaust gas discharged from the fuel battery cell flows, and a heat-insulating material disposed in contact with the exhaust gas channel and separating the storage portion from the exhaust gas channel, and
within the fuel battery, the heat supply channel in the first heat exchange portion is provided in contact with the exhaust gas channel and is at least partially buried in the heat-insulating material.

11. The cogeneration system according to claim 10, wherein the exhaust gas channel comprises, on a downstream side, a drain portion that discharges water contained in the exhaust gas and comprises, on an upstream side of the drain portion, a discharge portion that discharges exhaust contained in the exhaust gas.

12. The cogeneration system according to claim 11, further comprising:
an oxygen-containing gas channel which is provided close to the exhaust gas channel and through which an oxygen-containing gas to be supplied to the fuel battery cell flows,
wherein an introduction portion connected to the oxygen-containing gas channel is positioned between the drain portion and the discharge portion.

13. The cogeneration system according to any one of claims 10 to 12, wherein a combustion catalyst is disposed within the storage portion or disposed upstream of the heat exchange portion in the exhaust gas channel.

14. The cogeneration system according to any one of claims 1 to 13, further comprising:
a control device that controls fuel utilization rate to decrease or air utilization rate to increase in the fuel battery when the medium flows in the first heat exchange portion.
